# EUROPEAN PATENT SPECIFICATION

(11) **EP 1 755 348 B1**
(45) Date of publication and mention of the grant of the patent: **20.10.2010**
(21) Application number: 05291736.6
(22) Date of filing: 16.08.2005
(51) Int. Cl.: H04Q 3/00, H04L 12/56, H04L 29/06

(54) **A method of forwarding signaling information**
Verfahren zum Weiterleiten von Signalisierungsnachrichten
Procédé pour transmettre des messages de signalisation

(43) Date of publication of application: 21.02.2007
(73) Proprietor: Alcatel Lucent, 75008 Paris (FR)
(72) Inventor: Voith, Thomas, 70806 Kornwestheim (DE); Münch, Rainer, 71706 Markgröningen (DE); Oberle, Karsten, 68199 Mannheim (DE); Dormschitz, Peter, 70191 Stuttgart (DE)
(74) Representative: Schmidt, Werner Karl

(56) References cited:
- US-A1- 2003 043 992

## Description

The present invention relates to a method of forwarding signaling information within a communication network. The present invention also relates to a corresponding communication network.

In a communication network, signaling information is required in order to build up a connection between two users. This signaling information is generated according to a signaling protocol. For example, in order to establish a communication link between a so-called IP phone (IP = Internet Protocol) and the Internet, the SIP (SIP = Session Initiation Protocol) or the SDP (SDP = Session Definition Protocol) or other signaling protocols may be used. Such communication via the Internet is often called VoIP (VoIP = Voice over IP).

In these applications, it is often necessary to add rules or other extensions to the signaling information. For example, the provider of a network domain often wants to add private or domain specific rules or extensions concerning the interoperability of domains to the signaling information.

In order to add these extensions, it is known to "broaden" the signaling protocol and to provide specific instructions to the signaling information that are based on these adaptations of the signaling protocol. Thereby, extensions may be added to the signaling information under the broadened part of the signaling protocol. These additions are, however, always restricted to the specific adaptations of the signaling protocol and are therefore not generic. As a consequence, different network domains often use different approaches to add extensions to the same signaling protocol.

From US 2003/0043992 A1 a telephony communications network related to the field of VoIP is known, wherein the telephony communications network consists of two different networks, namely a conventional private branch exchange (PBX) network and an internet protocol (IP) based network. In addition to make and receive simple telephone calls, both, the PBX network and the IP network provide different services. The services provided by the PBX are accessible by exchanging a first signaling information denoted as a private signaling code. The services provided by the IP network are accessible by exchanging a second signaling information, in particular according to the SIP. To enable an IP phone to install a communication that makes use of both services, both signaling information have to be transmitted. This is achieved according to US 2003/0043992 A1 in that the first signaling information is encapsulated in the second signaling information, wherein encapsulation and decapsulation is performed by so called IP translators that are attached to the service providers and to the IP phone. The IP translators provide an adapted SIP stack, such that the encapsulating and decapsulating can be performed. To allow a communication to accesses both services, at least two different signaling information according to two different signaling protocols have to be transmitted, wherein at least the second signaling protocol needs an adaptation.

It is an object of the present invention to provide a generic method of forwarding signaling information within a communication network without an adaptation of the signaling information.

According to the present invention, this object is solved by a method according to claim 1. The object is also solved by a communication network according to claim 8.

According to the present invention, a message is generated by encapsulating the signaling information according to given definitions. Furthermore, the invention provides the possibility to add non-signaling information to this message. As a result, it is possible to add rules or extensions to the signaling information without the necessity to adapt the signaling protocol. Insofar, the invention is generic with regard to the signaling protocol.

As well, the invention allows to add rules or extensions to the signaling information in a very flexible and general way. In particular, it is possible to add rules for carrying out activities in a receiving device or module and/or to add information to control a receiving device or module.

Based on the invention, it is not necessary anymore that a network provider "broadens" the used signaling protocol in order to add extensions. Instead, the use of the invention enables the network provider to add rules or extensions independently of the used signaling protocol in a flexible and generic manner.

Further features, applications and advantages of the invention will become apparent from the following description of exemplary embodiments of the invention that are shown in the drawings. There, all described and shown features separately or in any combination represent the subject matter of the invention, independently of the wording in the description or the representation in the drawings and independently of the combination in the claims or the dependencies of the claims.

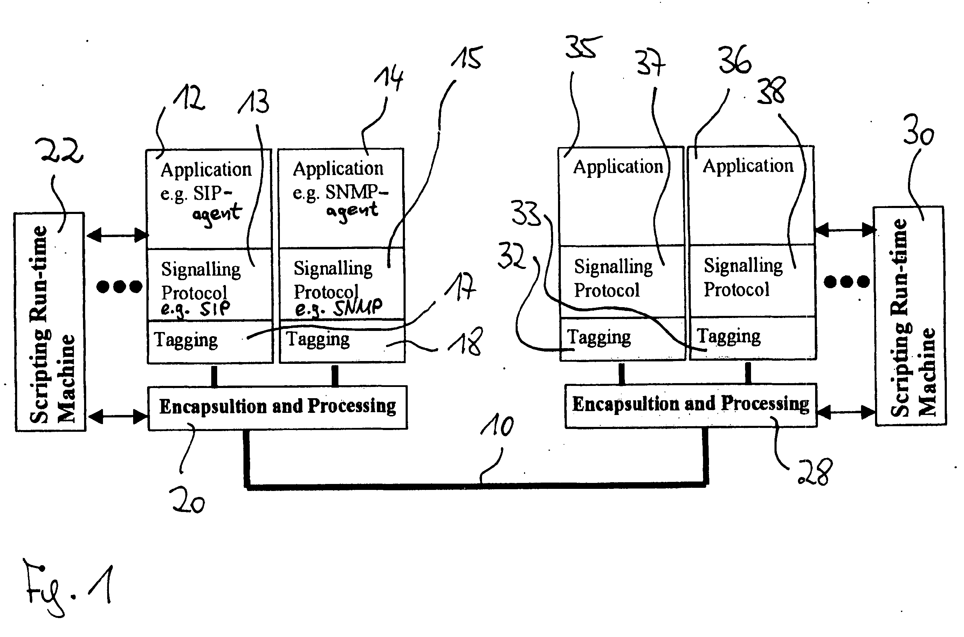

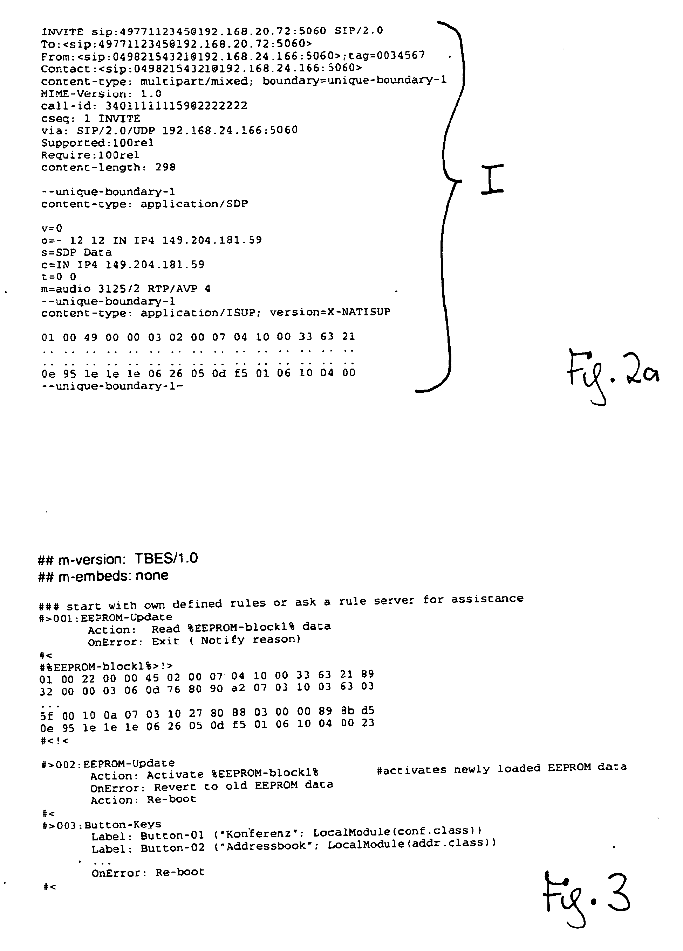

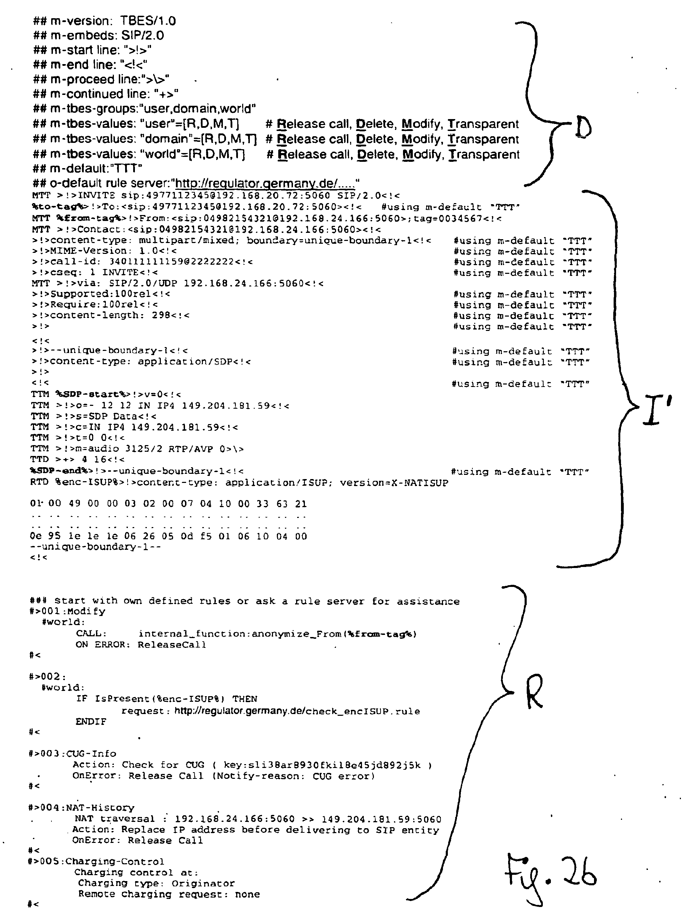

Figure 1 shows a schematic block diagram of an embodiment of a method according to the invention, and figures 2a, 2b and 3 show examples of program listings and messages generated according to the method of figure 1.

In figure 1, a part of a communication network is shown that comprises a communication link 10. In general, this communication link 10 may be present between applications as will be described below. In particular, the communication link 10 may be present between a user and a network domain (i.e. user access) or within a network domain (i.e. intra-domain communication) or between two different domains (i.e. inter-domain communication). For example, the communication link 10 may be a part of a VoIP (VoIP = Voice over IP) application and connects e.g. an IP phone (IP = Internet Protocol) to another user via the Internet.

As an example, it is now assumed that the communication link 10 is present between applications of a user and applications of a network domain, i.e. the user access case. However, it is emphasized that the following description is also applicable in connection with the other mentioned cases, i.e. intra-domain and inter-domain communications. In general, the following description is applicable in connection with applications that are connected via the communication link 10.

Furthermore, it is assumed that the Session Initiating Protocol (SIP) is used within the applications of the user and the applications of the network domain as the signaling protocol for transmitting signaling information. As well, it is assumed that domain specific rules shall be added to the signaling information by the applications of the user or by the applications of the network domain.

With these exemplary assumptions, the following procedure is carried out when the communication link 10 is built up.

In order to build up the communication link 10, signaling information in the form of a SIP-instructions listing are generated by an application 12, e.g. by a SIP agent. The generation of the SIP-instructions listing is carried out using the SIP as the signaling protocol 13. The SIP-instructions listing comprises all necessary information of a connection, in particular the identifications of the participating users of a connection.

Furthermore, another application 14 may be present relating to another signaling protocol 15, e.g. the Simple Network Management Protocol (SNMP).

Then, the SIP-instructions listing is tagged by a tagging module 17. The same may be carried out in connection with the other application 14 and the other signaling protocol by another signaling specific tagging module 18.

Then, an encapsulation and processing module 20 processes and encapsulates the SIP-instructions listing.

For that purpose, the encapsulation and processing module 20 invokes a scripting run-time machine 22 which checks whether rules or other extensions have to be combined with the SIP-instructions listing. These rules or extensions are defined by the application 12 or are given by default. If rules or other extensions are present, these rules and extensions are added to the SIP-instructions listing by the encapsulation and processing module 20. The result is a message that comprises the SIP-instructions listing and the rules/extensions.

The encapsulation and processing module 20 encapsulates this message and outputs the encapsulated message to the communication link 10. Then, the message is transmitted from via the communication link 10.

The transmitted message is received by an encapsulation and processing module 28 that decapsulates the received message.

Then, the encapsulation and processing module 28 invokes a scripting run-time machine 30 which checks the received message with regard to rules or extensions. If rules or extensions are comprised in the received message, the scripting run-time machine carries out the activities or functions relating to these rules or extensions.

Then, tagging modules 32, 33 are present to detag the instructions listing being comprised in the received message. Applications 35, 36 and signaling protocols 37, 38 are present to further process the detagged instructions listing.

The same procedure may be carried out in the opposite direction in order to transmit a message from the network domain side to the user side along the communication link 10.

In figure 2a, an example of a SIP-instructions listing is shown. The content of this listing is based on the Session Initiating Protocol. Only as an example, reference is made to the second and third line of the SIP-instructions listing of figure 2a where the receiving participant and the requesting, i.e. sending participant of the connection are defined.

In figure 2b, a message as generated according to the invention is shown. The content of this message is partly derived from the SIP-instructions listing of figure 2a and additionally comprises rules. As described in connection with figure 1, the message of figure 2b is tagged and encapsulated.

The message of figure 2b is only an example how to encapsulate and tag the SIP-instructions listing of figure 2a and the additional rules. Insofar, it is possible to establish other kinds of encapsulated messages having the same purpose as the message of figure 2b. For example, it is also possible to establish a binary-based encapsulated message having the same purpose as the text-based encapsulated message of figure 2b.

Therefore, the following description of the features of the message of figure 2b is only an example and these features could also be realized differently.

The SIP-instructions listing of figure 2a comprises a number of instruction lines that are abbreviated with the reference sign I in figure 2a. These instruction lines are also present in the message of figure 2b and are referenced there by the reference sign I'.

A first feature of the encapsulated message of figure 2b is the addition of terms like "TTM" or "TTD" at the beginning of an instruction line I'. The meanings of these terms are explained below.

A second feature of the encapsulated listing of figure 2b is the addition of terms like ">!>" or <!<" at the beginning and at the end of an instruction of each of the instruction lines I'. The meanings of these terms are explained below.

A third feature of the encapsulated listing of figure 2b is the addition of tags. For example, in the second and third line of the instruction lines I', a "%to-tag%" and a "%from-tag%" are present. These tags are generated as described in connection with figure 1.

Another feature of the encapsulated listing of figure 2b is the addition of definitions at the beginning of the listing, i.e. before the instruction lines I'. These definition lines are abbreviated by the reference sign D and begin with the term "##".

In the first definition line, the name of the used encapsulation procedure is mentioned, in the present example "TBES/1.0" (TBES = Text Based Encapsulating Structure, 1.0 = version number). In the second definition line, the name of the used signaling protocol is mentioned, in the present example "SIP/2.0" (SIP = Session Initiating Protocol, 2.0 = version number).

In the next four definition lines, the meanings of used terms are defined. For example, it is defined that the term ">!>" represents the start of an instruction line or that the term "<!<" represents the end of an instruction line.

In the next five definition lines, the above-mentioned terms "TTM" or "TTD" are defined. In the first one of these definition lines, it is defined that the three letters relate to the user, to the domain and to the world, respectively. Then, in the following three definition lines, the meaning of the letters "R", "D", "M" and "T" is defined for the user, the domain and the world, respectively. Then, in the last one of the five definition lines, a default value is given for the mentioned three letters.

And in the last one of the definition lines D, the Internet address of a rule server comprising a rule database is mentioned.

Of course, further and/or other definitions may be present in the message of figure 2b.

Another feature of the encapsulated message of figure 2b is the addition of rules at the end of the message, i.e. after the instruction lines I'. These rule lines are abbreviated by the reference sign R. the first rule line begins with the term "###" and the following rule lines begin with the term "#".

The first rule line defines the beginning of domain specific rules. In the example of figure 2b, five rules are comprised in the rule lines R.

A first rule ">001:Modify" relates to a modification of the information concerning the requesting participant of the connection. In the present example, the requesting participant shall be anonym.

A second rule ">002:" relates to a specific reference to the rule database of the mentioned rule server.

A third rule ">003:CUG-Info" relates to information concerning a so-called CUG (CUG = closed user group).

A fourth rule ">004: NAT-History" relates to information concerning a so-called NAT (NAT = network address translation).

And a fifth rule ">005:Charging-Control" relates to the kind of charging that has to be used in connection with the present connection.

Of course, further and/or other rules may be present in the message of figure 2b. And of course, further and/or other extensions may be present in the message of figure 2b.

The described encapsulated message of figure 2b is generated on the user side or on the network domain side as described in connection with figure 1. For example, the tagging modules carry out the provision of the described tags and the encapsulation modules carry out the described encapsulation of the instruction lines I of the SIP-instructions listing. Furthermore, the rules of the encapsulated listing of figure 2b are added to the tagged SIP-instructions listing as described in connection with figure 1.

Then, the encapsulated message of figure 2b is transmitted along the communication link 10. On the communication link, only the encapsulated message is transmitted. Insofar, any of these transmissions depends on the used encapsulation and therefore is user and/or domain specific. As well, any of these transmissions may comprise rules as described. As a consequence, any of the described rules is domain specific and can therefore be created on the user side or on the network domain side as needed.

After receiving the encapsulated message, the de-capsulation modules and the de-tagging modules as described in connection with figure 1, process the encapsulated message of figure 2b such that the original signaling information of the SIP-instructions listing is reconstructed. The described encapsulation and de-capsulation as well as the tagging and de-tagging is defined such that the integrity of the original signaling information remains unchanged. In this connection, the definition lines D of the encapsulated listing of figure 2b are used.

In addition, the run-time machines carry out those activities that are comprised in the rule lines R of the message of figure 2b.

As described above, the encapsulated message of figure 2b comprises rule lines R relating to activities. Of course, it is possible to forward the encapsulated message of figure 2b as well without these rule lines R, i.e. only with the definition lines D and the instruction lines I'. In this case, no rules are forwarded to the receiving modules and consequently no activities are carried out insofar.

As well, it is possible to add information lines within the encapsulated message that are similar to the rule lines. These information lines relate to extensions or other information to be forwarded within the network domain, i.e. intra-domain. This information may be used to control other run-time machines within the network domain. The information lines, of course, can be introduced as additions or replacements to the rule lines.

Similarly, scripting lines may be added within the encapsulated message. Such scripting lines may be used to trigger the execution of specific instructions at a receiving run-time machine.

Furthermore, it is possible that the encapsulated message does not comprise any instruction lines relating to signaling information, but only comprises rule lines and/or information lines and/or scripting lines. In this case, the definition lines are partly not necessary anymore.

An example of an encapsulated message that only comprises rule lines, is shown in figure 3. There, all lines begin with the term "#" or with the term "###".

The first rule line starts with the term "###" and only defines the beginning of domain specific rules. In the example of figure 3, three rules are comprised in the rule lines.

A first rule ">001:EEPROM-Update" and a second rule ">002:EEPROM-Update" relate to modifications of the content of EEPROMs (EEPROM = electronically erasable programmable read only memory).

And a third rule ">003:Button-Keys" relates to the definition of specific buttons.

Of course, further and/or other rules may be present in the encapsulated message of figure 3. And of course, information lines and/or scripting lines may also be present in figure 3, alternatively or additionally.

In the example of the encapsulated message of figure 3, non-signaling information, e.g. rules or the like, can be forwarded to a receiving module separately, i.e. without the need to forward any signaling information, e.g. without the need to forward a SIP-instructions listing.

The described procedures, in particular the described encapsulation modules and the described tagging modules, are independent of the used signaling protocol. It therefore doesn't matter whether e.g. the SIP or any other signaling protocol is used. Insofar, the described procedures, in particular the described encapsulation modules and the described tagging modules, are generic.

Furthermore, the described procedures allow to generate rules in a very flexible and general way. As described, these rules are not bound to the transmission of signaling information but can be forwarded autonomously.

## Claims

1. A method of forwarding signaling information within a communication network, **characterized in that** a message is generated by encapsulating the signaling information according to given definitions, and that non-signaling information is added to the message.

2. The method of claim 1 wherein the given definitions are added to the message.

3. The method of claim 1 wherein the signaling information is tagged.

4. The method of claim 1 wherein rules and/or extensions are added to the message.

5. The method of claim 4 wherein the rules relate to activities to be carried out by a receiving module.

6. The method of claim 4 wherein the extensions relate to the control of a receiving module.

7. The method of claim 1 wherein the non-signaling information is forwarded without any encapsulated signaling information.

8. A communication network comprising means to carry out the method of claim 1.

9. The communication network of claim 8 comprising modules for generating the signaling information, for generating the message and for forwarding the message.

10. The communication network of claim 8 comprising modules for encapsulating the signaling information and for adding the non-signaling information.

11. The communication network of claim 8 comprising modules for tagging purposes.

12. The communication network of claim 8 comprising a further module for receiving the message and for reconstructing the original signaling information.

13. The communication network of claim 8 comprising modules for de-capsulating the message and for carrying out activities or the like depending on the non-signaling information.

## Patentansprüche

1. Ein Verfahren zum Weiterleiten von Signalisierungsinformationen innerhalb eines Kommunikationsnetzwerks, **dadurch gekennzeichnet, dass** durch das Einkapseln der Signalisierungsinformationen gemäß gegebenen Definitionen eine Nachricht erzeugt wird, und dass Nicht-Signalisierungsinformationen zu der Nachricht hinzugefügt werden.

2. Das Verfahren nach Anspruch 1, wobei die gegebenen Definitionen zu der Nachricht hinzugefügt werden.

3. Das Verfahren nach Anspruch 1, wobei die Signalisierungsinformationen **gekennzeichnet** werden.

4. Das Verfahren nach Anspruch 1, wobei die Regeln und/oder Erweiterungen zu der Nachricht hinzugefügt werden.

5. Das Verfahren nach Anspruch 4, wobei sich die Regeln auf von einem Empfangsmodul auszuführende Aktionen beziehen.

6. Das Verfahren nach Anspruch 4, wobei sich die Erweiterungen auf die Steuerung eines Empfangsmoduls beziehen.

7. Das Verfahren nach Anspruch 1, wobei die Nicht-Signalisierungsinformationen ohne jedwede eingekapselte Signalisierungsinformationen weitergeleitet werden.

8. Ein Kommunikationsnetzwerk mit Mitteln zum Ausführen des Verfahrens gemäß Anspruch 1.

9. Das Kommunikationsnetzwerk nach Anspruch 8, mit Modulen zum Erzeugen der Signalisierungsinformationen, zum Erzeugen der Nachricht und zum Weiterleiten der Nachricht.

10. Das Kommunikationsnetzwerk nach Anspruch 8, mit Modulen zum Einkapseln der Signalisierungsinformationen und zum Hinzufügen der Nicht-Signalisierungsinformationen.

11. Das Kommunikationsnetzwerk nach Anspruch 8, mit Modulen für Kennzeichnungszwecke.

12. Das Kommunikationsnetzwerk nach Anspruch 8, mit einem weiteren Modul zum Empfangen der Nachricht und zum Wiederherstellen der ursprünglichen Signalisierungsinformationen.

13. Das Kommunikationsnetzwerk nach Anspruch 8, mit Modulen zum Entkapseln der Nachricht und zum Ausführen von Aktionen oder desgleichen in Abhängigkeit von den Nicht-Signalisierungsinformationen.

## Revendications

1. Procédé de transfert d'informations de signalisation dans un réseau de communications, **caractérisé en ce qu'**un message est généré en encapsulant les informations de signalisation selon des définitions données, et **en ce que** des informations de non signalisation sont ajoutées au message.

2. Procédé selon la revendication 1, dans lequel les définitions données sont ajoutées au message.

3. Procédé selon la revendication 1, dans lequel les informations de signalisation sont étiquetées.

4. Procédé selon la revendication 1, dans lequel des régies et/ou des extensions sont ajoutées au message.

5. Procédé selon la revendication 4, dans lequel les régies concernent les activités à effectuer par un module de réception.

6. Procédé selon la revendication 4, dans lequel les extensions concernent le contrôle d'un module de réception.

7. Procédé selon la revendication 1, dans lequel les informations de non signalisation sont transmises sans aucune information de signalisation encapsulée.

8. Réseau de communications comprenant des moyens pour exécuter le procédé selon la revendication 1.

9. Réseau de communications selon la revendication 8, comprenant des modules pour générer les informations de signalisation, pour générer le message et pour transférer le message.

10. Réseau de communications selon la revendication 8, comprenant des modules pour encapsuler les informations de signalisation et pour ajouter les informations de non signalisation.

11. Réseau de communications selon la revendication 8, comprenant des modules pour l'étiquetage.

12. Réseau de communications selon la revendication 8, comprenant un module supplémentaire pour recevoir le message et pour reconstruire les informations de signalisation originales.

13. Réseau de communications selon la revendication 8, comprenant des modules pour décapsuler le message et pour réaliser des activités ou similaires en fonction des informations de non signalisation.
